# FASCICULE DE BREVET EUROPEEN

(11) **EP 0 633 424 B1**
(45) Date de publication et mention de la délivrance du brevet: **22.10.1997**
(21) Numéro de dépôt: 94401080.0
(22) Date de dépôt: 13.05.1994
(51) Int. Cl.: F21V 8/00

(54) **Agencement de source d'éclairage à fibre optique et à faisceau limineux orientable**
Faseroptische Lichtquelleneinrichtung mit verstellbarem Lichtbündel
Fiber optics light source arrangement with steerable light beam

(30) Priorité: 14.05.1993 FR 9305869
(43) Date de publication de la demande: 11.01.1995
(73) Titulaire: MC2 S.A.R.L., 92120 Montrouge (FR); AD SIGN, F-75013 Paris (FR)
(72) Inventeur: Chambaret, Yves, F-75011 Paris (FR); Benavente, Roberto, F-78000 Versailles (FR)
(74) Mandataire: Beauchamps, Georges

(56) Documents cités:
- EP-A- 0 148 350
- WO-A-87/00907
- FR-A- 1 187 691
- FR-A- 2 542 063

## Description

L'invention concerne un agencement de source d'éclairage, du type décrit dans le préambule de la revendication 1.

Un agencement de ce type est connu par le document FR-A-2 542 063. Cet agencement n'assure qu'une déviation du faisceau d'un angle de 90°. Le document EP-A-0 148 350 décrit un agencement qui permet d'obtenir une déviation plus importante. Mais pour accomplir cette fonction, l'arrangement comprend un conducteur de lumière d'une structure compliquée et onéreuse.

La présente invention a pour but de proposer un agencement de source d'éclairage qui permet une orientation facile du faisceau lumineux sans présenter l'inconvénient de l'état de la technique.

Pour atteindre ce but, l'agencement comprend les caractéristiques énoncées dans la partie caractérisante de la revendication 1.

D'autres caractéristiques avantageuses de l'invention sont indiquées dans les revendications dépendantes 2 à 7.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels.

La figure 1 est une vue en coupe axiale d'un premier mode de réalisation d'un agencement d'éclairage à fibre optique selon la présente invention.

La figure 2 est une vue en perspective de l'agencement selon la figure 1.

La figure 3 montre, de façon schématique, un deuxième mode de réalisation d'un agencement de source d'éclairage selon l'invention.

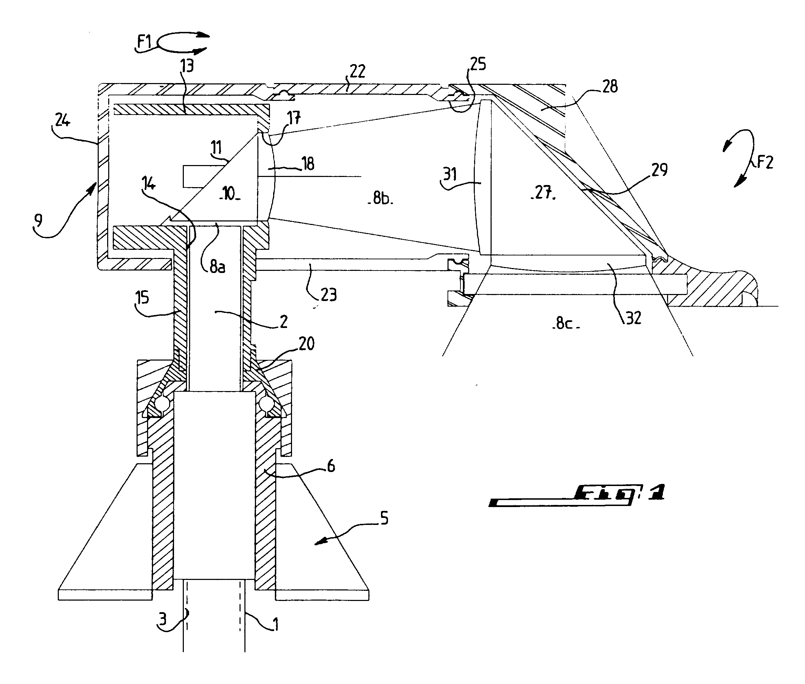

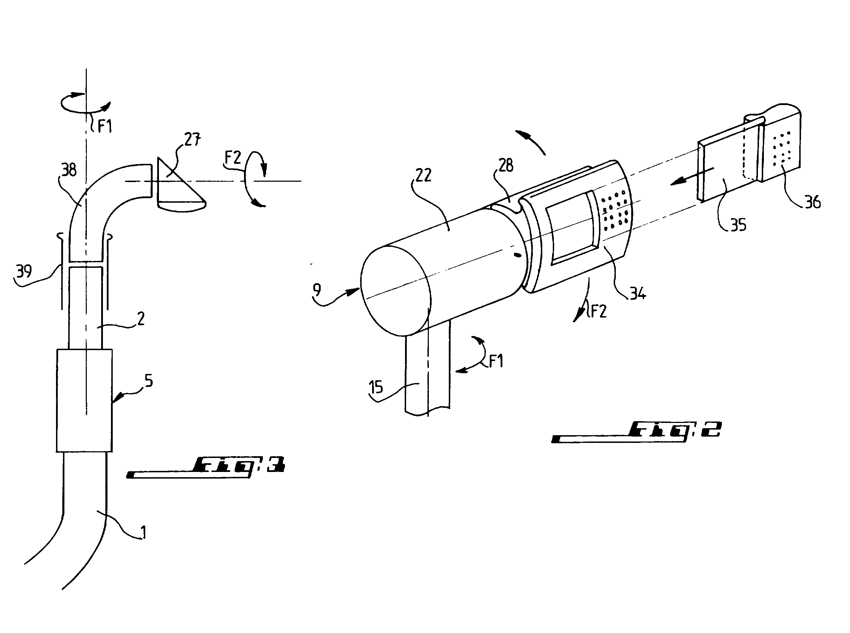

Sur la figure 1, le chiffre de référence 1 désigne un câble conducteur de lumière qui comprend une fibre optique 2 constituée d'une multitude de fibres élémentaires et est entouré d'une gaine 3. L'extrémité du câble 1 est maintenue en position fixe sur une structure de support non représentée, par un dispositif de fixation 5 qui comporte un élément 6 en forme de manchon qui entoure coaxialement le câble 1. On constate que l'extrémité émettrice de lumière, sort du manchon 6 d'une longueur prédéterminée, qui permet le montage sur cette extrémité du dispositif d'orientation du faisceau lumineux qui sera émis par la fibre et est schématiquement indiquée en 8. Les lettres a, b et c désignent différentes parties du faisceau qui se suivent dans l'axe de ce dernier. Le dispositif d'orientation porte la référence générale 9.

Ce dispositif d'orientation 9 comprend un premier organe de réflexion totale 10 du faisceau lumineux sortant de la fibre optique 2 et indiquée en 8a. Cet organe est réalisé sous forme d'un prisme à réflexion totale, qui est formé par un prisme rectangulaire-isocèle et dont la surface d'hypoténuse 11 constitue la surface réfléchissante. Ce prisme est placé dans un corps creux 13 à surface extérieure cylindrique qui présente un perçage 14 dans sa paroi périphérique, en dessous du prisme. Au niveau de ce perçage 14, le corps 13 comporte un embout tubulaire 15 qui fait radialement saillie et présente un diamètre supérieur au diamètre de la fibre optique 2 de façon à pouvoir être emmanché sur celui-ci, de façon rotative selon la flèche F1.

Comme le montre la figure, le prisme 10 est placé de telle façon à l'intérieur du corps 13 que la surface réfléchissante 11 se trouve en face du perçage 14 tout en étant inclinée sur un angle de 45° par rapport à l'axe de celui-ci et l'axe de la fibre optique 2. Le corps 13 présente dans sa paroi frontale avant une fenêtre 17 de sortie du faisceau lumineux 8b après la réflexion du faisceau par la surface inclinée 11. Le prisme 10 comprend sur sa face de sortie une lentille convergente 18 engagée dans la fenêtre 17. Le prisme 10 et la lentille 18 peuvent être réalisés par injection en une seule pièce.

L'embout cylindrique 15 du corps 13 peut être emmanché par son extrémité sur une pièce 20 qui est montée rotative sur l'extrémité du manchon 6 du dispositif de fixation 5 du câble optique 1. L'extrémité de l'embout 15 est solidarisable en rotation de la pièce 20 de toute manière appropriée connue.

Le corps 13 est monté coaxialement à l'intérieur d'un boîtier cylindrique 22 en supportant celui-ci. Le boîtier 22 est axialement mobile par rapport au corps 13 et présente à cette fin dans sa partie périphérique une ouverture 23 de passage de l'embout 15 du corps 13. Le boîtier 22 est fermé au niveau de l'extrémité ouverte du corps 13 et est ouvert à son autre extrémité qui s'étend au-delà de la lentille 18.

Le dispositif d'orientation 9 du faisceau lumineux émis par la fibre optique comprend un deuxième prisme rectangulaire-isocèle 27 à réflexion totale, qui est disposé dans un corps de support 28 de façon que le faisceau 8b sortant du premier prisme 10 puisse être réfléchi par sa surface réfléchissante 29 pour former le faisceau de sortie 8c. La pièce de support 28 est montée rotative sur l'extrémité ouverte 25 du boîtier 22, c'est-à-dire autour de l'axe du faisceau 8b, comme cela est indiqué par la ligne fléchée F2. Le prisme 27 porte sur sa face d'entrée du faisceau 8b une lentille convergente 31 et sur sa surface de sortie du faisceau 8c une lentille convergente ou divergente 32. Le prisme 27 et les lentilles 31 et 32 peuvent être réalisés par injection en une seule pièce.

Comme le montre la figure 2, la pièce de support 28 du prisme 27 comprend au niveau de la sortie du faisceau lumineux 8c une partie en saillie 34 qui est adaptée pour recevoir un filtre optique 35 monté sur un organe de préhension 36.

Il ressort de la description qui vient d'être faite, en se référant aux figures 1 et 2, que par rotation du dispositif d'orientation autour de l'axe de la fibre optique 2, en direction de la flèche F1, grâce à la disposition coaxiale de l'embout 15 sur la fibre 2, le faisceau 8b peut être orienté librement angulairement dans un plan perpendiculaire à l'axe de la fibre optique 2. Grâce à la rotation de la pièce de support 28 avec le deuxième prisme 27 autour de l'axe du faisceau 8b selon la flèche F2, le faisceau sortant 8c est librement orientable dans l'espace. En déplaçant le boîtier 22 axialement par rapport au corps 13 de support du prisme 10, c'est-à-dire en déplaçant le prisme 27 dans l'axe du faisceau 8b, et grâce aux lentilles, l'angle de divergence du faisceau 8c est variable. Il est encore à noter que l'utilisation d'un prisme, comme organe de réflexion totale, présente l'avantage d'un indice de réfraction plus fort, ce qui permet d'obtenir un diamètre plus faible du faisceau réfléchi par rapport à un miroir plan.

La figure 3 montre un deuxième mode de réalisation d'un agencement selon l'invention, dans lequel un conducteur de lumière rigide, composé de fibres fusionnées et en forme d'un arc de cercle de 90° est monté rotatif sur l'extrémité de la fibre optique 2, à l'aide d'une douille de montage indiquée schématiquement en 39. Sur l'extrémité libre du conducteur 38 peut être monté rotatif un prisme à la manière du prisme 27 du premier mode de réalisation.

Bien entendu de multiples modifications peuvent être apportées à l'invention telle que décrite et représentée aux figures, à condition de conserver les caractéristiques essentielles de l'invention, telles que le fait que le câble 1 avec sa fibre optique 2 est retenu en position fixe et que l'orientation du faisceau lumineux émis par la fibre optique est assurée par un dispositif optique qui est orientable sans exposer la fibre optique à des contraintes mécaniques. Le dispositif d'orientation du faisceau, en raison de sa structure peu encombrante, compact et de faible poids peut être monté sur le support de la fibre. Il est à noter cependant que des moyens de support pour le dispositif d'orientation peuvent êre prévus, qui sont indépendants du dispositif de support de la fibre optique. Les prismes peuvent être orientés manuellement ou, le cas échéant, de façon télécommandée, de toute façon connue appropriée.

## Revendications

1. Agencement de source d'éclairage, du type comprenant un câble conducteur de lumière réalisé sous forme d'une fibre optique formée par une multitude de fibres élémentaires, des moyens d'orientation variables du faisceau lumineux sortant de la fibre, comprenant un organe de déviation du faisceau, situé à la sortie de la fibre optique et monté rotatif autour de l'axe de la fibre, un dispositif de retenue et de fixation de la fibre optique sur une structure de support, caractérisé en ce que ledit dispositif de fixation est un dispositif de maintien en position fixe (5) de la fibre optique (1, 2), qu'il comprend un second organe de déviation variable (27) de faisceau de lumière monté mobile en translation le long de l'axe du faisceau (8b) dévié par le premier organe de déviation (10), et un dispositif optique associé aux organes de déviation (10, 27) de façon à permettre, avec le déplacement axial du second organe de déviation (27), une variation de l'angle de divergence du faisceau de sortie (8c).

2. Agencement selon la revendication 1, caractérisé en ce que le premier organe de déviation (10) est monté dans un boîtier (22) pourvu d'un embout tubulaire (15) de conduction de la lumière de la fibre optique au premier organe de déviation (10) et de positionnement du boîtier sur l'extrémité de la fibre optique, et en ce que le second organe de déviation (27) est monté rotatif sur le boîtier (22), les deux organes de déviation (10, 27) étant disposés dans le boîtier de façon à pouvoir exécuter un mouvement relatif dans l'axe du faisceau dévié par le premier organe (10).

3. Agencement selon l'une des revendications 1 ou 2, caractérisé en ce qu'un organe de déviation (10, 27) est un organe comportant une surface de réflexion totale du faisceau, qui est inclinée par rapport à celui-ci et dont l'angle d'inclinaison est variable.

4. Agencement selon la revendication 2, caractérisé en ce que le premier organe de déviation (10) est monté dans un corps de support comportant l'embout -15) précité, ce corps est disposé à l'intérieur du boîtier (22) pourvue d'une fente axiale (23) de passage de l'embout (15) de façon que le boîtier soit déplaçable axialement par rapport au corps porteur de l'organe de déviation (10).

5. Agencement selon les revendications 2 et 3 ou 4, caractérisé en ce que l'embout tubulaire (15) est monté sur le dispositif de maintien en position fixe (5) du câble (1), coaxialement à la fibre optique (2).

6. Agencement selon la revendication 4, caractérisé en ce qu'un organe de déviation (10, 27) est formé par un prisme à réflexion total.

7. Agencement selon la revendication 5, caractérisé en ce que le prisme (10, 27) présente une forme rectangulaire-isocèle et sa surface d'hypoténuse constitue la surface de réflexion totale.

## Claims

1. Lighting source arrangement of the type comprising a light conducting cable made as an optical fiber formed of a multitude of elementary fibers, variable means for the orientation of the light beam exiting from the fiber,. comprising a beam deviation member located at the outlet of the optical fiber and mounted for rotation about the axis of the fiber, a device for retaining and fastening the optical fiber onto a supporting structure, characterized in that the said fastening device is a device (5) for holding the optical fiber (1, 2) in a stationary position, in that it comprises a second variable member (27) for the deviation of the light beam, mounted for translatory motion along the axis of the beam (8b) deviated by the first deviation member (10) and an optical device associated with the deviation members (10, 27) so as to permit, together with the axial displacement of the second deviation member (27), a variation of the angle of divergence of the outcoming beam (8c).

2. Arrangement according to claim 1, characterized in that the first deviation member (10) is mounted in a casing (22) provided with a tubular nipple (15) for the conduction of the light from the optical fiber to the first deviation member (10) and for positioning the casing on the end of the optical fiber and in that the second deviation member (27) is rotatably mounted onto the casing (22), both deviation members (10, 27) being disposed within the casing so that they may carry out a relative movement along the axis of the beam deviated by the first member (10).

3. Arrangement according to one of claims 1 or 2, characterized in that a deviation member (10, 27) is a member comprising a surface for the total reflection of the beam, which is inclined with respect to the latter and the angle of inclination of which is variable.

4. Arrangement according to claim 2, characterized in that the first deviation member (10) is mounted in a supporting body comprising the aforesaid nipple (15), this body being disposed inside of the casing (22) provided with an axial slot (23) for the passage of the nipple (15) so that the casing be axially displaceable with respect to the body carrying the deviation member (10).

5. Arrangement according to claims 2 and 3 or 4, characterized in that the tubular nipple (15) is mounted onto the device (5) for holding the cable (1) in a fixed position coaxially to the optical fiber (2).

6. Arrangement according to claim 4, characterized in that a deviation member (10, 27) is formed of a total-reflection prism.

7. Arrangement acording to claim 5, characterized in that the prism (10, 27) exhibits a rectangular-isosceles shape and its hypotenuse surface constitutes the total-reflection surface.

## Patentansprüche

1. Beleuchtungsquellenanordnung, derjenigen Gattung mit einem als eine aus einer Vielzahl von Elementarfasern gebildeten Lichtleitfaser geschaffenen Lichtleitkabel, veränderlichen Mitteln zur Ausrichtung des aus der Faser austretenden Lichtstrahlenbündels, welche ein am Ausgang der Lichtleitfaser liegendes und drehbar um die Achse der Faser angeordnetes Strahlenbündelablenkungsgerät, eine Vorrichtung zur Halterung und zur Befestigung der Lichtleitfaser an einem Tragaufbau umfaßt, dadurch gekennzeichnet, daß die besagte Befestigungsvorrichtung eine Vorrichtung (5) zum Halten der Lichtleitfaser (1, 2) in einer ortsfesten Stellung ist, daß sie ein zweites veränderliches Lichtstrahlenbündelablenkungsgerät (27), das entlang der Achse des durch das erste Ablenkungsgerät (10) abgelenkten Strahlenbündels (8b) translationsbewegbar angeordnetes Lichtstrahlenbündelablenkungsgerät (27) und eine den Ablenkungsgeräten (10, 27) zugeordnete optische Vorrichtung umfaßt, um, zusammen mit der axialen Verschiebung des zweiten Ablenkungsgerätes (27), eine Veränderung des Streuungswinkels des Ausgangsstrahlenbündels (8c) zu gestatten.

2. Anordnung gemäß Anspruch 1, dadurch gekennzeichnet, daß das erste Ablenkungsgerät (10) in einem Gehäuse (22) angeordnet ist, das mit einem rohrförmigen Ansatzstutzen (15) zur Leitung des Lichtes aus der Lichtleitfaser zu dem ersten Ablenkungsgerät (10) hin und zur Positionierung des Gehäuses an dem Ende der Lichtleitfaser versehen ist und daß das zweite Ablenkungsgerät (27) an dem Gehäuse (22) drehbar angebracht ist, wobei die beiden Ablenkungsgeräte (10, 27) in dem Gehäuse derart angeordnet sind, daß sie eine relative Bewegung entlang der Achse des durch das erste Gerät (10) abgelenkten Strahlenbündels ausführen können.

3. Anordnung gemäß einem der Ansprüche 1 oder 2, dadurch gekennzeichnet, daß ein Ablenkungsgerät (10, 27) ein eine Fläche zur totalen Reflexion des Strahlenbündels aufweisendes Gerät ist, welche in bezug auf das Strahlenbündel geneigt ist und deren Neigungswinkel veränderlich ist.

4. Anordnung nach Anspruch 2, dadurch gekennzeichnet, daß das erste Ablenkungsgerät (10) in einem den vorgenannten Ansatzstutzen (15) aufweisenden Tragkörper angeordnet ist, dieser Körper innerhalb des mit einem axialen Schlitz (23) zum Durchgang des Ansatzstutzens (15) derart angeordnet ist, daß das Gehäuse in bezug auf den das Ablenkungsgerät (10) tragenden Körper axial verschiebbar ist.

5. Anordnung gemäß den Ansprüchen 2 und 3 oder 4, dadurch gekennzeichnet, daß der rohrförmige Ansatzstutzen (15) koaxial zur Lichtleitfaser (2) an der Vorrichtung (5) zum Halten des Kabels (1) in einer ortsfesten Stellung angeordnet ist.

6. Anordnung gemäß Anspruch 4, dadurch gekennzeichnet, daß ein Ablenkungsgerät (10, 27) durch ein Totalreflexionsprisma gebildet wird.

7. Anordnung gemäß Anspruch 5, dadurch gekennzeichnet, daß das Prisma (10, 27) eine gleichschenkliche rechteckige Gestalt aufweist und ihre Hypothenusefläche die Totalreflexionsfläche bildet.
